Europäisches Patentamt

European Patent Office

Office européen des brevets

(19)

(11) Veröffentlichungsnummer : **0 241 491**
**B1**

(12) **EUROPÄISCHE PATENTSCHRIFT**

(45) Veröffentlichungstag der Patentschrift :
20.09.89

(21) Anmeldenummer : 86905702.6

(22) Anmeldetag : 29.09.86

(86) Internationale Anmeldenummer :
PCT/CH 86/00135

(87) Internationale Veröffentlichungsnummer :
WO/8702304 (23.04.87 Gazette 87/09)

(51) Int. Cl.⁴ : **B 29 C 33/38, B 29 C 33/50,
B 29 C 33/56, B 28 B 7/34,
B 28 B 7/06, B 29 K103/08**

(54) FORMWERKZEUG, INSBESONDERE FÜR DIE VERARBEITUNG VON KUNSTOFF- UND KUNSTHARZBETON- ODER - MÖRTEL-FORMMASSEN.

(30) Priorität : 10.10.85 CH 4386/85

(43) Veröffentlichungstag der Anmeldung :
21.10.87 Patentblatt 87/43

(45) Bekanntmachung des Hinweises auf die Patenterteilung : 20.09.89 Patentblatt 89/38

(84) Benannte Vertragsstaaten :
AT BE CH DE FR GB IT LI LU NL SE

(56) Entgegenhaltungen :
WO—A—83 /022 51
CH—A—   309 487
CH—A—   490 960
DE—A— 1 459 365
DE—A— 2 204 584
DE—A— 3 231 188
FR—A— 1 036 962
FR—A— 2 145 066
FR—A— 2 170 002
FR—A— 2 188 491
FR—A— 2 359 691
US—A— 1 539 550
US—A— 2 047 356
US—A— 3 277 551

(73) Patentinhaber : UNIPORT POLYESTER-FORMENBAU
TH. HIRZEL
Bernstrasse 9B
CH-8964 Rudolfstetten (CH)

(72) Erfinder : HIRZEL, Theodor
Hasenbergstrasse 402
CH-8967 Widen (CH)

(74) Vertreter : Blum, Rudolf Emil Ernst et al
c/o E. Blum & Co Patentanwälte Vorderberg 11
CH-8044 Zürich (CH)

## Beschreibung

Die Erfindung betrifft ein Verfahren gemäss dem Oberbegriff des Anspruchs 1 und eine Vorrichtung zur Durchführung dieses Verfahrens nach Anspruch 12.

Die vielfältigen Einsatzmöglichkeiten von Werkstücken aus Kunststoff, Kunstharzbeton oder -mörtel mit Kunststoff oder -harzbindemitteln, Schaumstoffen, Gips usw., welche einem chemisch ablaufenden Aushärteprozess unterworfen werden können, sind allgemein bekannt.

Vor allem Polymerbeton bzw. -mörtel besitzt als Werkstoff die folgenden Vorteile gegenüber Zement : Die Festigkeit ist höher, sogar die Druckfestigkeit beträgt das 1,5-fache ; die Zugfestigkeit (Zerstörung des Werkstoffs) beträgt das 5- bis 10-fache ; die Reissdehnung beträgt das 20- bis 100-fache ; die Biegefestigkeit das 5- bis 10-fache ; die Schlagfestigkeit (Zähigkeit) ist sehr viel höher ; Armierungen (inserts) werden sehr präzise umfasst und damit sehr gut gehalten ; weiter ist sehr wesentlich, dass die Wasseraufnahme viel kleiner und damit die Frostbeständigkeit viel grösser ist, zudem ist das Harz des Polymerbetons bzw. -mörtels beklebbar und beschichtbar, so dass keine Gefahr besteht, dass Oberflächenbeschichtungen wie beim Zement mit der Zeit abblättern.

Der Vorteil von insbesondere Polymerbeton gegenüber Stahl besteht im wesentlichen darin, dass der Kunststoff eine 6-fach höhere Dämpfung besitzt (Resonanzprobleme) ; dass die Isolation viel höher ist und, nebst der chemischen Resistenz bis 40 % weniger Primärenergieverlust zu verzeichnen ist.

Ein allgemeiner Vorteil besteht darin, dass die oben genannten Stoffe in der Regel eine schnelle Formhärte besitzen, d. h., dass innerhalb kurzer Zeit genügende Härte zum Entformen vorliegt.

Entsprechend besteht ein grosses Bedürfnis, diese Werkstoffe vergiessen zu können, nur so sind komplizierte Formgebungen überhaupt auf wirtschaftliche Weise erreichbar.

Sobald man versucht, einen wirtschaftlichen Giessprozess zu erreichen, werden jedoch gewisse Nachteile der oben genannten Stoffe, insbesondere jedoch von Polymerbeton bzw. -mörtel offenbart : Das Rohmaterial ist wesentlich teurer als andere Stoffe wie z. B. Zement oder Stahl ; für wirtschaftliche Fertigung muss damit der Giessprozess rationell und automatisierbar ausgestaltet sein. Weiter unterliegen diese Stoffe einem Schwund beim Aushärten, erschwerend kommt noch das Schrumpfverhalten dazu. Letzteres ist abhängig vom Granulat- und Harzanteil ; es steigt mit sinkendem Granulat- und steigendem Harzanteil. Wird als Bindemittel Polyester gewählt, erreicht der Schwund die Grössenordnung von Prozenten ; im Falle von Epoxidharz die Grössenordnung von Promillen und im Falle von PMMA eine zwischen obigen Extremen liegende Grössenordnung. Daraus ergibt sich, dass Schwund- und Schrumpfverhalten entscheidende Probleme beim Vergiessen dieser Werkstoffe darstellen.

Dem Problem des Schwindens kann in gewissem Mass dadurch begegnet werden, dass der Formteil nach erreichen der Formhärte sofort entformt wird. Er kann dann in halbhartem Zustand gelagert werden und ohne weitere Probleme entsprechend der Werkstoffzusammensetzung schwinden.

Das Schrumpfen führt zu grösseren, bis heute nicht wirtschaftlich überwindbaren Nachteilen. Es führt bei bindemittelhaltigen oder weiteren mehrkomponentigen Formmassen zu unansehnlichen Endprodukten : Während dem Vergiess- und Anhärteprozess findet an der Oberfläche der Vergussmasse eine gewisse Entmischung statt ; die sich ansammelnde Oberflächenkomponente besitzt grösseren Schwund als die unter der Oberfläche, also weiter innen gelegene Masse. Entsprechend bilden sich feine Schwundbilder in der sonst an sich glatten Oberfläche ; dieser Vorgang wird durch die nicht zu vermeidende Trennmittelschicht noch gefördert ; die Formmasse kann sich leicht von der Gussformoberfläche ablösen. Solche Probleme treten in anderen Fachgebieten, etwa beim Vergiessen von Beton, welcher praktisch ohne Schwund erhärtet oder beim Pressen von Keramik nicht auf.

Seit vielen Jahren wurden wohl stetig Materialien und Mischanlagen verbessert ; wegen der oben genannten charakteristischen Eigenschaften insbesondere des Kunstharzbetons oder -mörtels konnten jedoch beim Vergiessvorgang selbst keine nennenswerten Fortschritte erzielt werden.

Ein Problem beim konventionellen Giessprozess besteht darin, dass die aushärtende Gussmasse sich mit der Wandoberfläche der meist metallischen Gussform verbindet. Entsprechend muss eine Trennmittelschicht zwischen Form und Gussteil vorgesehen werden. Diese kann durch Aufspritzen oder Aufpinseln auf die formgebende Oberfläche der Gussform gebracht werden. Solche herkömmliche Trennmittelschichten, die auf die Formfläche der Gussform aufgespritzt oder -gepinselt werden, um das Entformen zu erleichtern, erweisen sich als ungeeignet, wenn die Formmasse als Füllstoff ein scharfkantiges Granulat, z. B. Quarzsand, enthält. Das Granulat, das sich beim Giessprozess entlang der Formfläche bewegt, kann die Trennmittelschicht, vor allem bei wiederholter Benützung, stellenweise gänzlich aufkratzen. An den so entblössten Stellen der Formfläche ist die Wirkung des Trennmittels aufgehoben, und das Werkstück haftet unter Umständen so stark an der Formfläche, dass es nur mit grossem Kraftaufwand oder überhaupt nicht von der Gussform getrennt werden kann. Auch wenn die Trennmittelschicht nach jedem Vergiessvorgang an den beschädigten Stellen neu aufgebracht wird, stellen sich Probleme. Mit der Zeit wird die Trennmittelschicht an solchen Orten so dicht, dass das Werkstück als solches zu grosse Toleranzen aufweist. Auch feinere, die Entformung an sich nicht sehr behindernde Kratzer in der Trennmittelschicht können Probleme verursachen : Beim Aushärten unterliegt das Formteil einem gewissen Schwund. Vor allem bei komplizierteren Formen ist es wichtig, dass sich die aushärtende Formmasse entlang der formgebenden Oberfläche der Gussform etwas verschieben kann. Wird diese Verschiebung durch lokales Ankleben in der Form behindert, können im Formteil schädliche Eigenspannungen entstehen. Solche Eigenspannungen sind besonders dort unerwünscht, wo sie bevorzugt entstehen : in der Form von der Formmasse zu umfliessende Erhebungen sind der Einwirkung von Granulat besonders ausgesetzt und hinterlassen im Formteil Vertiefungen, welche bei späterer Beanspruchung der Kerbwirkung unterstehen.

Insbesondere die Herstellung von im Querschnitt U-förmigen Teilen bereitet grosse Schwierigkeiten : Durch den auch bei nur Anhärten lassen nicht vermeidbaren Schwund zieht sich die Formmasse zusammen, so dass die beiden Schenkel des U den zwischen ihnen liegenden Gussformteil umklammern. Durch diese Umklammerung ergibt sich eine Reibung, so dass für das Entformen ein so grosser Kraftaufwand nötig wird, dass eine Beschädigung des erst halbharten Werkstücks häufig vorkommt. Lässt man andererseits das Werkstück vollständig aushärten, ist der Schwund und damit die Umklammerung so gross, dass in der Regel noch während dem Aushärteprozess Spannungsrisse auftreten. Ein weiteres Problem besteht darin, dass beim Entformen trotz des Schrumpfmechanismus teilweise an der Oberfläche liegendes Granulat die Trennmittelschicht zerkratzt.

Trotz dieser Probleme wurden bereits feingliedrige und dünnwandige Teile aus z. B. Polymerbeton bzw. -mörtel hergestellt. Das entsprechende Verfahren ist aber ausserordentlich aufwendig und unwirtschaftlich : Die konventionelle Form, bedeckt mit einer konventionellen Trennmittelschicht muss noch mit Gel-Kaut bedeckt werden. Dies ist eine Kunstharzflüssigkeit, welche, über der Trennmittelschicht aufgebracht, eine aushärtende Oberflächenschicht in der Form bildet. Das entformte Werkstück besitzt dann eine sehr schöne glatte und glänzende Oberfläche ; das Ueberwinden der Schrumpfprobleme muss aber mit gravierenden Nachteilen bezahlt werden : Das Werkstück besteht nicht mehr zu 100 Prozent aus dem vergossenen Kunststoffmaterial, es hat eine Oberflächenschicht aus Gel-Kaut. Damit werden einige Vorteile des Kunststoffs wie Frostbeständigkeit usw. zunichte gemacht.

Aus der DE-A2 204 584 ist ein Formwerkzeug insbesondere zum Pressen keramischer Gegenstände bekannt. Zum Herausziehen der Feuchtigkeit aus dem gepressten Ton mittels Unterdruck ist das Formwerkzeug porös, aus einer Mischung von Gips und Kunstharz ausgeführt und ist bis auf eine formgebende, freigehaltene und damit gas- bzw. flüssigkeitsdurchlässige Oberfläche mit einem gasdichten Mantel bedeckt. Auch mit diesem Formwerkzeug, welches für Keramik vorgesehen ist, lassen sich, wie erwähnt, die genannten Probleme beim Giessen von Polymerbeton bzw. -mörtel nicht lösen.

FR-PS 2 359 691 offenbart ein Verfahren zum Herstellen von Betonfertigkeiten mit Hilfe einer aus Metallprofilen gefertigten Schalung. Die Schalung besitzt Löcher, durch welche Luft abgesaugt werden kann, so dass eine über die Schalung gespannte thermoplastische Folie sich an den Schalungswänden anlegt. Damit ist auf der Schalung eine Trennschicht entstanden, welche an den Schalungswänden unverrückbar fest haftet und das Abgiessen von Betonfertigkeiten mit guter Oberflächenqualität ermöglicht.

Versuche haben ergeben, dass insbesondere Polymerbeton oder -mörtel auf diese Weise nicht vergossen werden kann. Da die Trennschicht teilweise in die Bohrungen der Schalung eingesogen wird und damit dort unverrückbar festhaftet, sind die notwendigen geringen seitlichen Verschiebungen nicht zuverlässig gegeben. Weiter bilden sich bei den viel feiner gegliederten Formen für Kunststoffverguss da und dort Lufttaschen zwischen der Folie und der zwischen Luftlöchern liegenden Formoberfläche. Wesentlich ist zudem, dass das Schrumpfen nicht vermieden werden konnte.

CH PS 569 561 offenbart eine Vorrichtung, bei welcher durch Unterdruck eine Trennmittelschicht in Form einer Gummihaut zum Anliegen an die Formoberfläche gebracht wird. Da es sich dabei um eine Presse handelt, genügt es, wenn die Gummihaut vor einem Arbeitsgang nur ungefähr an der Formoberfläche anliegt. Ein präzises Anliegen der Gummihaut, insbesondere auch bei komplizierten formgebenden Oberflächen, war angesichts der in CH PS 569 561 erwähnten, unbefriedigenden Strömungsverhältnissen in der Form nicht zu erreichen.

Mit dem Problem, eine Haut oder Folie einwandfrei tiefzuziehen, beschäftigen sich auch die Tiefzieher, welche z. B. Blisterpackungen herstellen. Ausgehend von Offenbarungen, wie z. B. FR-PS 2 359 691 wurden Holzformen hergestellt, welche zahllose Bohrungen aufweisen. Für feingliedrige und komplizierte Formen konnte der an sich beachtliche, weil einzige, Fortschritt auf die Dauer nicht befriedigen. Angeregt von der Offenbarung von FR-PS 2 359 691 sowie CH-PS 569 561 wurde dann versucht eine Kunststofform mit befriedigender Luftevakuierungsleistung, d. h. mit genügend gross ausgebildeten Luftkanälen herzustellen. Dazu wurde wie folgt vorgegangen : Entsprechend der gewünschten Form des herzustellenden Werkstücks wurde abzuschätzen versucht, an welchen Stellen besonders hoher Unterdruck erzeugt und damit besonders hohe Evakuierungsleistung gegeben sein muss. Danach wurde eine Mutterform gebaut, in welche eine grosse Anzahl Nylonfäden, je nach der gewünschten Evakuierungsleistung, eingelegt wurde ; danach konnte die Mutterform mit dem gewünschten Kunststoff ausgegossen werden, worauf sich die für die Werkstückherstellung notwendige Kunststoffgussform bildete. Nach Erhärten wurden dann die Nylonfäden aus der Gussform herausgezogen, so dass die gewünschten Luftkanäle zur Verfügung standen. Die mit solchen Formen hergestellen Werkstücke befriedigten einigermassen. Der Aufwand zur Herstellung der Gussform ist jedoch ausserordentlich gross, zudem braucht es Formenbauer mit grosser Erfahrung und einem ausgesprochenen Gefühl für die notwendige Evakuierungsleistung. Zudem bestand immer wieder die Gefahr, dass bei einer fertiggestellten Form festgestellt werden musste, dass die Nylonfäden und damit die Luftkanäle doch nicht optimal verliefen.

Ausgehend von diesem Stand der Technik ist es Aufgabe der vorliegenden Erfindung, die beschriebenen Nachteile zu überwinden und ein Verfahren zur Herstellung der genannten Formteile zu schaffen. Das Herstellungsverfahren soll dabei nur in untergeordneter Weise die Formgebung der Formteile bestimmen. Weiter soll der fertiggegossene Formteil einwandfrei entformt werden können, eine vollständig glatte, nicht geschrumpfte Oberfläche besitzen und im wesentlichen frei von Eigenspannungen sein.

Zur Lösung dieser Aufgabe weist das erfindungsgemässe Verfahren die kennzeichnenden Merkmale von Anspruch 1 auf. Eine Gussform zur Durchführung dieses Verrens besitzt Merkmale gemäss Anspruch 12.

Für den Körper des mindestens einen Formabschnittes ist eine Mischung aus Granulat mit im wesentlichen gleichmässiger Körnung und Bindemittel vorgesehen. Als Granulat ist Aluminiumgranulat oder Stahlgranulat vorgesehen. Das Bindemittel ist vorzugsweise ein Epoxidharz. Der den Körper umgebende Mantel kann im einfachsten Fall, insbesondere bei kleineren Gussformen, aus einem Laminat aufgebaut sein, unter Verwendung des gleichen Bindemittels, das in der Mischung für den Kern enthalten ist. Bei grösseren Gussformen ist zweckmässigerweise eine zusätzliche Hinterfütterung vorgesehen, die z. B. ebenfalls aus einem Kunstharzbeton bzw. -mörtel bestehen kann. Alle zur Vervollständigung der Gussform benötigten Armaturen, z. B. Befestigungsmittel, sind vorzugsweise in den Formkörper bzw. in die Hinterfütterung eingegossen bzw. einlaminiert.

Eine einheitliche Mischung aus Granulat und Bindemittel bedeutet natürlich nicht, dass nur eine Korngrösse in dieser Mischung vorhanden ist. Die Granulatkörner werden beim Herstellen durch Sieben aussortiert; jede Siebgrösse hat ihre Toleranzen, man sehe dazu die Datenblätter der Hersteller. Einheitliche Mischung bzw. « im wesentlichen gleichmässige Körnung » bedeutet also eine Körnung gleicher Grösse mit einem Toleranzbereich so, wie er vom Hersteller erhältlich ist. In diesem Zusammenhang wird auch angemerkt, dass die Begriffe Polymerbeton bzw. -mörtel sich nur auf die unterschiedliche Korngrösse des Materials beziehen.

Dem Fachmann ist sofort klar, dass eine solche, aus im wesentlichen gleichmässiger Körnung aufgebaute Gussform leicht nachbearbeitet werden kann. Da nämlich keine aus verschiedenen Materialschichten aufgebaute Form vorliegt, besteht keine Gefahr, dass bei der Nachbearbeitung die Oberflächenschicht durchstossen und damit die Form wertlos gemacht wird. So ist es denkbar, neue Ausnehmungen in der Formoberfläche anzubringen oder, mit Hilfe einer geringen Aushöhlung neu modellierte Erhöhungen in der formgebenden Oberfläche der Gussform zu verankern. Selbstverständlich kann die formgebende Oberfläche zur Toleranzverbesserung des Werkstücks z. B. in einem Schleifprozess geglättet werden.

Die erfindungsgemässe Lösung hat ausserdem den Vorteil, dass auf eine Trennmittelbeschichtung der Formfläche verzichtet und stattdessen als Trennmittel in der Gussform eine Folie aus thermoplastisch verformbaren Material, z. B. aus Polyvinylchlorid oder Polyäthylen, vorgesehen werden kann, die bei Unterdruck im Formkörper an der Formfläche dicht anliegt. Im Falle einer Gussform mit im wesentlichen konkaver Formfläche wird die Trennfolie durch Tiefziehen an die Formfläche herangeholt, während bei einer Gussform mit im wesentlichen konvexer Formfläche vorzugsweise eine Schrumpffolie verwendet wird, die sich unter Wärmeeinwirkung der Formfläche anpasst. Durch partielles Tiefziehen der Trennfolie lassen sich auch kleinere Hohlräume, sogenannte Formnester, in der Formfläche einwandfrei formgerecht auskleiden. Für die Entformung des Werkstückes kann die Trennfolie durch Ueberdruck im Formkörper von der Formfläche abgestossen und an das Werkstück gepresst werden. Sie kann dann einfach vom Werkstück abgezogen werden oder als Verpackung am Werkstück verbleiben. Als Verpackung bietet die Trennfolie einen gewissen Schutz gegen Umwelteinflüsse, im Gegensatz zu einer wasserlöslichen Trennmittelschicht, die sich dazu weniger eignet. In gewissen Fällen, z. B. bei rauher Werkstückfläche, lässt sich eine wasserlösliche Trennmittelschicht zudem nur schwer gänzlich entfernen, wobei die Rückstände die Werkstückoberfläche unansehnlich erscheinen lassen und eine nachträgliche Oberflächenbehandlung, z. B. einen Anstrich, erschweren. Auch dieser Nachteil entfällt bei Verwendung einer Trennfolie.

Nicht nur dass die Trennfolie beim Schwinden des anhärtenden Formteils gewissermassen als Schmiermittel wirkt, auch beim Entformen von z. B. im Querschnitt U-förmigen Teilen resultiert ein entscheidender Vorteil : Auch nur halbharte Formteile können einwandfrei entformt werden, da die Reibungskraft zwischen den Schenkeln und dem von ihnen umfassten Gussformteil herabgesetzt ist. Zudem muss die Entformungskraft nicht am Formteil selbst ansetzen ; es kann auch einfach an der Trennfolie gezogen werden.

In Gegensatz zu anderen Giessverfahren, bei denen das Formwerkzeug einen zentralen Platz einnimmt und an diesen Platz die Einrichtungen für den Betrieb des Formwerkzeuges, wie Antriebs- und Führungsmittel für das Zusammenführen und Auseinanderbewegen der einzelnen Gussformen, Vibratoren und Zuleitungen für einen Gas- oder Flüssigkeitsaustausch, fest installiert und für den Einsatz verschiedener Formwerkzeuge eingerichtet sind, bildet z. B. bei der Verarbeitung von Kunstharzbeton-Formmassen die Betonmischmaschine den zentralen Teil der Verarbeitungsanlage, an den das Formwerkzeug zur Aufnahme der Formmasse herangeführt werden muss. Eine Verarbeitungsanlage für diesen Zweck umfasst vorzugsweise mehrere Stationen, an denen das Formwerkzeug den verschiedenen Verfahrensschritten unterworfen ist. Dies können beispielsweise sein : Eine Vorbereitungsstation, an der das Formwerkzeug zur Aufnahme der Formmasse vorbereitet wird (Einlegen von Trennfolien, Zusammenführen der Gussformen, Unterdruckerzeugung, Temperatureinstellung), eine Giessstation, eine Polymerisierstation und eine Entformungsstation (Ueberdruckerzeugung, Auseinanderführen der Gussformen). Unter diesen Umständen ist es zweckmässig, die Einrichtungen zum Betrieb des Formwerkzeuges diesem fest zuzuordnen, so dass das Formwerkzeug ein autonomes Giessaggregat darstellt, das mit beweglichen Zuleitungen für die Stromzufuhr und die Zu- und Abfuhr gasförmiger und/oder flüssiger Medien von Station zu Station transportiert wird.

Eine diesen Zweck erfüllende Ausführungsform besteht z. B. bei einem Formwerkzeug mit wenigstens zwei Gussformen zur Bildung einer geschlossenen Hohlform darin, dass die Gussformen an einem fahrbaren Gestell befestigt sind und Führungsmittel zum Schliessen und Oeffnen der Hohlform, Mittel zum Anschluss eines Ueber- oder Unterdruckerzeugers und Zuhalteeinrichtungen aufweisen. Zusätzlich kann am Gestell ein Vibrator angebracht sein.

Bei der Herstellung von offenen Behältern mit eingezogenem Oeffungsrand ist es zum Entformen des Werkstückes normalerweise erforderlich, für die Innen- und die Aussenform teilbare Gussformen zu verwenden. Eine Verarbeitung von Kunststoff- und Kunstharzbeton-Formmassen, welche bei Raumtemperatur oder nur wenig höheren Temperaturen durchgeführt werden kann, ermöglicht jedoch die Anwendung einer ungeteilten Innenform, welche einen elastisch verformbaren Hohlkörper als formgebenden Teil aufweist, der mit einem starren Basisteil gasdicht verbunden ist, wobei der Basisteil wenigstens einen Durchlass für einen Gasaustausch aufweist. Zum Ein- und Ausfahren der Innenform in die bzw. aus der Aussenform wird der Hohlkörper unter Vakuum gesetzt. Dadurch lassen sich seine Ausmasse so stark verringern, dass er ungehindert durch die Oeffnung der Aussenform geführt werden kann. Nach dem Zusammensetzen von Aussen- und Innenform wird dann der Hohlkörper unter Druck gesetzt, so dass er die für die Bildung der Innenwandung des Behälters massgebende Form annimmt und während des Giessprozesses beibehält. Vorzugsweise bestehen Hohlkörper und Basisteil einstückig aus einem Elastomer, das im Basisteil mit einem formfesten Füllstoff, z. B. einem Granulat, gemischt ist.

Für die Verarbeitung von gas- und/oder flüssigkeitshaltigen Formmassen, z. B. für die Herstellung von Werkstücken aus Strukturschaum, werden Formwerkzeuge mit metallischer Formfläche bevorzugt. Eine metallische, glatt geschliffene Formfläche ist auch beim Einsatz von Trennfolien vorteilhaft· Eine entsprechende Ausführungsform des erfindungsgemässen Formwerkzeuges kann darin bestehen, dass der Formkörper wenigstens im Nahbereich der Formfläche als Füllstoff metallische Bestandteile aufweist, mit denen ein poröser, die Formfläche bildender Metallbelag verbunden ist.

Der Formkörper kann im gesamten Metallgranulat, z. B. Stahl-, Aluminium- oder Kupferkörner enthalten. Aus Gewichts- und Kostengründen ist es jedoch in manchen Fällen vorteilhafter, wenn der Formkörper nur im Nahbereich der Formfläche eine Schicht aus Metallgranulat und im übrigen nichtmetallisches Granulat, z. B. Quarzsand, aufweist.

Zur Herstellung des Formwerkzeuges mit metallischer Formfläche wird erfindungsgemäss so verfahren, dass zunächst mit einem Gemisch aus Granulat und Bindemittel der Formkörper gebildet wird, dass hierauf die den Metallbelag erhaltende Formfläche des Formkörpers mechanisch bearbeitet und anschliessend sandgestrahlt wird, und dass hernach der Formkörper getempert und schliesslich der Metallbelag auf die Formfläche aufgetragen wird.

Das Material für den Formkörper kann entweder als vorfabrizierter Block vorliegen, in den die Negativform mechanisch eingearbeitet wird, oder es kann in breiigem Zustand auf der Positivform vergossen werden. Eine mechanische Bearbeitung der Formfläche ist in jedem Fall erforderlich, um das blanke Metall des Granulats für die nachfolgende Verbindung mit dem Metallbelag hervorzuheben. Durch das Sandstrahlen der Formfläche wird das Harz von der Oberfläche zurückgedrängt bzw. entfernt.

Mit der anschliessenden Temperung wird die erforderliche Form- bzw. Druckbeständigkeit des Formkörpers herbeigeführt, wobei sich die Kenngrössen (Temperatur, Dauer, usw.) der Temperung nach der späteren Verwendung des Formwerkzeuges, insbesondere nach dem Arbeitsdruck und der Arbeitstemperatur richten.

Für den Metallbelag kann z. B. Kohlenstoffstahl, Aluminium oder Kupfer verwendet werden, entsprechend dem Metallgranulat des Formkörpers. Zum Auftragen des Metallbelages auf die Formfläche bedient man sich mit Vorteil des Flammspritzverfahrens, wobei der Auftrag ein- oder mehrschichtig erfolgen kann, je nach der gewünschten Belagsstärke und Porosität. Vorzugsweise wird die Durchlässigkeit des Formwerkzeuges durch die Porosität des Metallbelages bestimmt. Unter geeigneten Umständen kann der Metallbelag auch im galvanischen bzw. elektrolytischen Verfahren abgelagert werden.

Falls erforderlich, kann die Formfläche noch eine Nachbehandlung erfahren, z. B. in einem Schleifprozess geglättet werden.

Formwerkzeuge der beschriebenen Art eignen sich unter anderem für die Herstellung von Styroporerzeugnissen sowie von Sandformen (Kernen) für die Metallgiesserei.

Bei einer praktischen Ausführungsform besteht das Gemisch für den Formkörper aus Metallgranulat mit einer Korngrösse von 450 μm und Epoxidharz als Bindemittel im Mischungsverhältnis von 82 Gewichtsteilen Granulat zu 18 Gewichtsteilen Harz. Die Temperung erfolgt während 12 Stunden bei einer Temperatur von 130 °C, mit einer Vor- und Nachtemperung von je 6 Stunden bei 60 °C. Die Belagsstärke des Metallbelages liegt in der Grössenordnung von 0,1 mm.

Die Erfindung betrifft auch ein Verfahren zum Betrieb des erfindungsgemässen Formwerkzeuges für die Verarbeitung von Kunstharzbeton- oder -mörtel-Formmassen. Die Verarbeitung solcher Formmassen erfordert die Anwendung einer während des Giessprozesses auf die Formmasse einwirkenden Vibration, um zu gewährleisten, dass alle Hohlräume der Form vollständig mit Formmasse ausgefüllt werden.

Vor allem dann, wenn die Formmasse in einem unteren Gussformteil eingegeben wird und durch Eindrücken eines oberen Gussformteils in der Form verteilt werden soll, hat es sich gezeigt, dass dieses Verteilen durch Druck allein nicht erreicht werden kann. Kunstharzbeton oder -mörtel-Formmassen besitzen teilweise eine derart hohe Viskosität, dass bei genügendem Druck für einwandfreie Verteilung die in der Formmasse enthaltenen Granulate die Formoberfläche irreparabel verletzen würden. Es hat sich nun gezeigt, dass beim Einsatz von Unwucht-Rüttlern in der Art, wie sie bei der Verarbeitung einheitlicher Formmassen mit Erfolg angewandt werden, zum Vergiessen von Beton- bzw. Mörtelmischungen nicht geeignet sind, da sich die Beton- bzw. Mörtelbestandteile während des Giessprozesses entmischen, d. h. dass die Vibration zu einer ungleichmässigen Verteilung der Füllstoffe im Werkstück führt. Dies ist auf die exzentrische Schwingungsanregung bei Unwucht-Rüttlern zurückzuführen, welche Schwingungsformen mit zentralen Schwingungsknoten und mit dem Abstand vom Schwingungsknoten zunehmenden Schwingungsamplituden ergibt. Die vom Zentrum radial nach aussen zunehmende stärkere Schwingungsanregung der Füllstoffe treibt letztere zur Abwanderung nach aussen und führt beispielsweise bei einem Werkstück in Form eines Behälters zu einer Anreicherung der Füllstoffe an der äusseren Behälterwandung und einer entsprechenden Verdünnung an der Innenwandung. Eine Entmischung der Mischungsbestandteile lässt sich nun dadurch vermeiden, dass erfindungsgemäss das Formwerkzeug während des Giessprozesses einer Vibration mit einheitlich, z. B. ausschliesslich vertikal gerichteten Schwingungsamplituden ausgesetzt wird. Dazu kann zwar auch ein Unwucht-Rüttler eingesetzt werden, wenn die nicht vertikal gerichteten Schwingungskomponenten mit zusätzlichen Mitteln genügend gedämpft werden. Vorteilhafter ist jedoch die Verwendung eines Vibrators mit einheitlicher Schwingungsrichtung.

Eine insbesondere für die Verarbeitung dickflüssiger Formmassen geeignete Ausführungsform des erfindungsgemässen Verfahrens zum Betrieb eines Formwerkzeuges mit wenigstens zwei, eine Aussenform und eine Innenform darstellenden Gussformen besteht darin, dass das erforderliche Quantum an Formmasse gänzlich in die noch offene Aussenform eingefüllt und anschliessend die Innenform in die Aussenform gedrückt wird, wobei die Vibration während der Verdrängung der Formmasse angewandt wird.

In der Zeichnung sind Ausführungsbeispiele der Erfindung dargestellt, und zwar zeigen :
Fig. 1 im Schnitt die Formkörper eines Formwerkzeuges mit zwei Gussformen zur Herstellung eines Formteils im Press- oder Verdrängungsverfahren ;
Fig. 2 im Schnitt die Formkörper eines Formwerkzeuges mit drei Gussformen, wobei die die Innenform darstellende Gussform einen elastisch verformbaren Hohlkörper als formgebenden Teil aufweist, und
Fig. 3 ein als autonomes, fahrbares Giessaggregat ausgebildetes Formwerkzeug, dem die Einrichtungen zu dessen Betrieb fest zugeordnet sind.

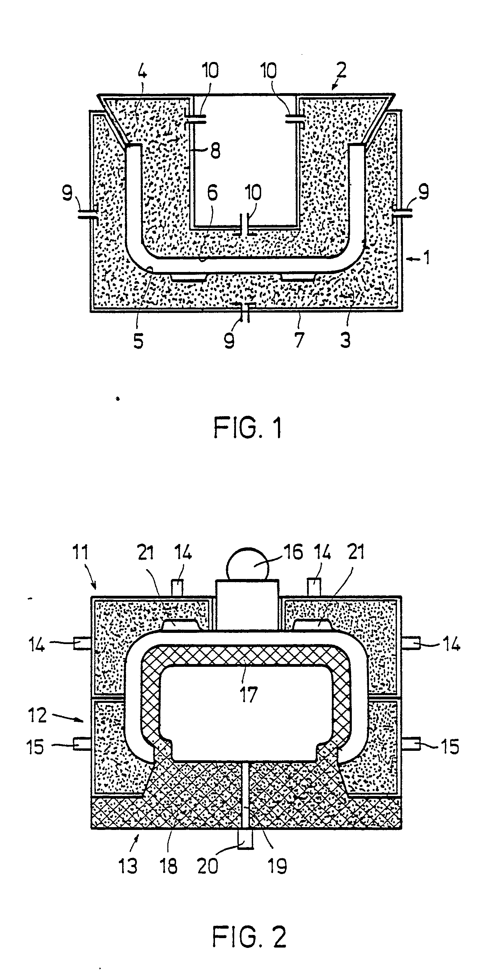

Die Formkörper nach Fig. 1 bilden zwei, eine Aussenform 1 und eine Innenform 2 darstellende Gussformen zur Bildung einer Hohlform, z. B. für die Herstellung von Pflanzenkistchen aus Kunstharzmörtel. Jeder Formkörper besitzt einen Kern 3 bzw. 4 aus porösem, bis an die Formfläche 5 bzw. 6 durchlässigem Kunstharzmörtel und einen den Kern nach aussen gasdicht abschliessenden Mantel 7 bzw. 8. Der Kunstharzmörtel ist beispielsweise eine Mischung aus Aluminiumgranulat und einem Epoxidharz, und die Formfläche 5 bzw. 6 wird durch einen porösen Aluminiumbelag gebildet. Der Mantel 7 bzw. 8 besteht aus einem Laminat mit Epoxidharz als Bindemittel. Für den Gasaustausch von und zu der Formfläche 5 bzw. 6 sind im Mantel 7 bzw. 8 mehrere Durchlässe vorgesehen, die durch in den Formkörper eingegossene und einlaminierte Rohrstücke 9 bzw. 10 gebildet sind. An diesen Rohrstücken können Kupplungsmittel, z. B. Schnellkupplungen, für den Anschluss von Schläuchen zur Verbindung der Formkörperkerne 3, 4 mit einem Ueber- oder Unterdruckerzeuger vorgesehen sein. Diese und weitere Einrichtungen, z. B. Unterbau mit Befestigungsmitteln, welcher die Gussformen 1 und 2 vervollständigen, sind in der Zeichnung nicht dargestellt.

Vor dem Giessprozess werden die Formkörper 3 und 4 mit Trennfolien aus gummielastischem Material ausgerüstet, welche bei Unterdruck im Formkörper an den Formflächen 5 und 6 dicht anliegen. Nach dem Giessprozess, d. h. beim Entformen des Werkstücks, werden diese Trennfolien durch Ueberdruck im Formkörper von der Formfläche abgestossen. Der Giessprozess erfolgt bei diesem Ausführungsbeispiel in der Weise, dass das erforderliche Quantum an Formmasse gänzlich in die noch offene Aussenform 1 eingefüllt und anschliessend die Innenform 2 in die Aussenform 1 gedrückt wird, bis die Hohlform geschlossen ist.

Die Formkörper nach Fig. 2 bilden die Gussformen zur Herstellung von offenen Behältern mit eingezogenem Rand. Die Aussenform besteht aus zwei Gussformen 11 und 12, während die Innenform 13 einteilig ist. Die Formkörper der Aussenformen 11 und 12 sind im Prinzip gleich aufgebaut wie diejenigen nach Fig. 1 und ebenfalls mit Kupplungen 14 bzw. 15 für den Anschluss eines Ueber- oder Unterdruckerzeugers versehen. An der Oberseite der Aussenform 11 befindet sich die mit einem Stopfen 16 verschliessbare Einfüllöffnung für die Zufuhr der Formmasse. Die Innenform 13 weist einen elastisch verformbaren Hohlkörper 17 als formgebenden Teil auf, der mit einem starren Basisteil 18 gasdicht verbunden ist. Hohlkörper 17 und Basisteil 19 bestehen im vorliegenden Beispiel einstückig aus einem Elastomer, z. B. Polyuraethan, das im Basisteil mit einem formfesten Füllstoff, z. B. Quarzsand, gemischt ist, wobei in der Uebergangszone zum Hohlkörper die Füllstoffdichte allmählich abnimmt. Der Basisteil 18 weist einen Durchlass 19 mit Anschlusskupplung 20 auf, über den der Hohlkörper 17 zum Schliessen und Oeffnen der Hohlform unter Vakuum und für den Giessprozess unter Druck gesetzt werden kann.

Die Durchlässe im Mantel des Formkörpers, z. B. bei der Aussenform 11, sind vorzugsweise so angeordnet, dass an den Stellen, wo sich Formnester 21 befinden, besondere Vakuumzonen entstehen, die nach dem Ansaugen der Trennfolie an den grossflächigen Formflächenteilen zusätzlich zur Wirkung gebracht werden können, um die Trennfolie gänzlich in die Formnester 21 hereinzuziehen.

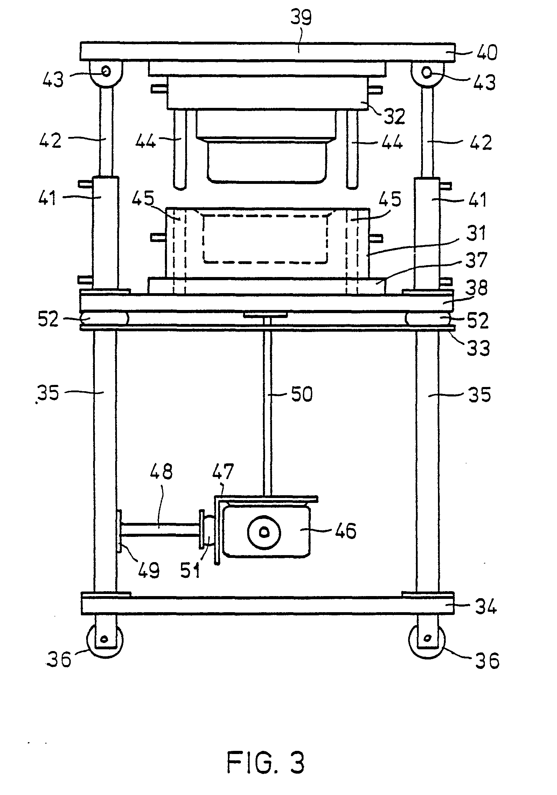

Die Fig. 3 zeigt schematisch ein komplett eingerichtetes Formwerkzeug für den Einsatz in einer Produktionsstrasse. Die Gussformen 31 und 32, die zusammen eine Hohlform etwa nach Fig. 1 bilden, sind an einem Gestell angeordnet, das einen fahrbaren Untersatz aufweist. Der Untersatz besteht aus einem oberen Rahmen 33, einem unteren Rahmen 34, vier Eckstützen 35 und Rollen 36. Die Gussform 31 ist mit ihrem Unterbau 37 an einer unteren, auf dem oberen Rahmen 33 des Untergestells ruhenden Plattform 38 und die Gussform 32 ist mit ihrem Unterbau 39 an einer oberen Plattform 40 befestigt. Hydraulisch oder pneumatisch betriebene Arbeitszylinder 41 verbinden die beiden Plattformen 38 und 40 und dienen zum Oeffnen, Schliessen und Zuhalten der Hohlform. An der oberen Plattform 40 besteht die Verbindung mit dem Arbeitszylinder bzw. mit deren Kolbenstangen 42 je aus einem lösbaren Schwenklager 43, so dass die obere Plattform 40 mit der Gussform 32 wahlweise auf die eine oder andere Seite hochgeschwenkt werden kann, wozu die Verbindung der Schwenklager einseitig zu lösen ist. Die Gussformen sind für ihren Zusammenschluss zur Hohlform mit Führungen ausgerüstet, und zwar sind an der Gussform 32 Dorne 44 eingeformt, welche mit an der Gussform 31 eingeformten Kugelbüchsen 45 zusammenarbeiten.

Zum Betrieb des Formwerkzeugs ist ein Vibrator vorgesehen. Im vorliegenden Beispiel handelt es sich um einen gewöhnlichen Unwucht-Rüttler 46, dessen abgewinkelter Sockel 47 über einen Steg 48 an einer zwei Eckstützen 35 miteinander verbindenden Traverse 49 befestigt und über ein Kraftübertragungsglied 50 mit der unteren Plattform 38 verbunden ist. Damit kann die geschlossene Hohlform mit der Formmasse während des Giessverfahrens in Vibration versetzt werden. Damit auf die Plattform 38 nur Vibrationen mit einheitlich, im Beispiel senkrecht gerichteten Schwingungsamplituden übertragen werden, sind zwischen dem Sockel 47 des Unwucht-Rüttlers 46 und dem Steg 48 einerseits und zwischen dem oberen Rahmen 33 und der unteren Plattform 38 andererseits Gummipuffer 51 bzw. 52 vorgesehen, welche alle anders gerichteten Schwingungsamplituden soweit abdämpfen, dass sie praktisch keine Wirkung mehr haben. An die Stelle des Unwucht-Rüttlers 46 könnte ein unmittelbar an einer der Plattformen 38, 40 befestigter Vibrator mit einheitlicher Schwingungsrichtung treten.

Die beschriebenen Formwerkzeuge eignen sich für die Verarbeitung von Polymeren und Beton- und Mörtelarten mit allen gängigen Kunstharzbindemitteln, sowie von Schaumstoffen, Gips und ähnlichen nichtmetallischen Materialien, zur Herstellung von Gebrauchsgegenständen, Sanitärartikeln, technischen Artikeln und anderen Formteilen.

## Patentansprüche

1. Verfahren zur Herstellung eines gegossenen Formteils aus einer zu vergiessenden Formmasse bestehend aus Kunststofformmasse, Beton- und Mörtelarten mit Kunststoff- oder -harzbindemitteln, Schaumstoffen, Gips sowie ähnlichen nichtmetallische Materialien, welche chemisch härten, wobei eine Gussform (1, 2 ; 11, 12) aus mindestens einem Formabschnitt mit einem porösen, gasdurchlässigen Körper (3, 4) aus Bindemittel und Granulat verwendet wird, welche Körper bis auf eine formgebende, freigehaltene und damit gasdurchlässige Oberfläche (5, 6) mit einem gasdichten Mantel (7, 8) versehen ist, und dessen gasdichter Mantel wenigstens einen Durchlass (9, 10) für einen Gasaustausch aufweist, dadurch gekennzeichnet, dass ein Körper mit einem Granulat mit im wesentlichen gleichmässiger Körnung verwendet wird, dass vor dem Vergiessvorgang in die Gussform eine mindestens von der Form lösbare, als Kunststofftrennfolie ausgebildete individuelle Trennmittelschicht eingebracht wird, dass die Folie durch thermoplastisches Dehnen und Schrumpfen in Wärme zum Vollständigen und gleichmässigen Anliegen an alle Konturen der formgebenden Oberfläche der Gussform gebracht wird, indem die Trennfolie durch Tiefziehen mittels einer auf die Trennfolie einwirkenden Luftdruckdifferenz an die formgebende Oberfläche herangeholt und, dehnend oder schrumpfend, vollständig und gleichmässig an sie angepasst wird, wobei zu verdrängende Luft aus dem Raum zwischen Folie und formgebender, poröser Oberfläche gleichmässig durch jede Pore letzterer mit Hilfe des Durchlasses (9, 10) abgelassen oder gesaugt wird.

2. Verfahren nach Anspruch 1, dadurch gekennzeichnet, dass die Folie und der auf dieser genügend gestärkte Formteil durch Anlegen von Ueberdruck an den mindestens einen Durchlass (9, 10) entformt wird.

3. Verfahren nach Anspruch 1 oder 2, dadurch gekennzeichnet, dass die Folie nach dem Entformen zur Bildung einer Oberflächenschicht auf dem Formteil belassen wird.

4. Verfahren nach Anspruch 1, dadurch gekennzeichnet, dass nebst dem mindestens einen Formabschnitt ein weiterer Formabschnitt verwendet wird, welcher einen elastisch verformbaren Hohlkörper (17) mit formgebender Aussenfläche aufweist, welcher mit einem starren Basisteil (18) gasdicht verbunden ist, wobei der Basisteil (18) mindestens einen Durchlass (19) für einen Gasaustausch aufweist (Fig. 2), dass die Formabschnitte für den Vergiessprozess zusammengefügt werden, indem der Hohlkörper unter seine Ausmasse verringenden Unterdruck gesetzt wird, und dass nach erfolgtem Zusammensetzen der Formabschnitte der Hohlkörper unter Druck gesetzt wird, so dass er seine für den Vergiessprozess massgebende Form einnimmt und während dem Giessprozess beibehält.

5. Verfahren nach Anspruch 4, dadurch gekennzeichnet, dass der Hohlkörper (17) und Basisteil (18) aus einem Elastomer bestehen, welcher im Basisteil mit einem formfesten Füllstoff, z. B. einem Granulat, gemischt ist.

6. Verfahren nach einem der vorangehenden Ansprüche, dadurch gekennzeichnet, dass eine Gussform verwendet wird, bei welcher der Kunstharzbeton oder -mörtel eingegossene Metallgranulate, insbesondere Aluminiumgranulat und/oder Quarzsand enthält.

7. Verfahren nach Anspruch 1, dadurch gekennzeichnet, dass die Gussform insbesondere für die Verarbeitung von Polymerbeton oder -mörtel während und/oder nach dem Einfüllen von Formmasse einer Schwingung mit nur einer Amplitudenrichtung ausgesetzt wird.

8. Verfahren nach einem der Ansprüche 1 bis 7, dadurch gekennzeichnet, dass die zu vergiessende Masse in den mindestens einen Formabschnitt gegeben wird und mindestens ein weiterer Formabschnitt derart mit dem mindestens einen Formabschnitt zur Gussform zusammengefügt wird, dass die zu vergiessende Masse durch Verdrängung vollständig im Innern der Gussform verteilt wird.

9. Verfahren nach einem der Ansprüche 1 bis 8, dadurch gekennzeichnet, dass bei vergiessen von dickflüssigen Formmassen, insbesondere Polymerbeton bzw. -mörtel mindestens der eine Formabschnitt während dem Zusammenfügen der Formabschnitte zur Gussform einer Schwingung mit nur einer Amplitudenrichtung ausgesetzt wird.

10. Verfahren nach Anspruch 9, mit wenigstens zwei, eine Aussenform und eine Innenform darstellenden Formabschnitten, dadurch gekennzeichnet, dass das erforderliche Quantum an Formmasse gänzlich in die noch offene Aussenform (1) eingefüllt und anschliessend die Innenform (2) in die Aussenform gedrückt wird, wobei die Vibration während der Verdrängung der Formmasse angewandt wird.

11. Verfahren nach einem der vorangehenden Ansprüche, dadurch gekennzeichnet, dass der mindestens eine Formabschnitt zur Korrektur der formgebenden Oberfläche einer Nachbehandlung unterworfen wird.

12. Gussform zur Durchführung des Verfahrens nach Anspruch 1, dadurch gekennzeichnet, dass der Formkörper aus Aluminiumgranulat oder Stahlgranulat mit im wesentlichen gleichmässiger Korngrösse und aus Epoxidharz als Bindemittel besteht.

13. Gussform nach Anspruch 12, dadurch gekennzeichnet, dass die Formfläche mit einem porösen Metallbelag versehen ist.

14. Verfahren zur Herstellung der Gussform nach Anspruch 12, dadurch gekennzeichnet, dass der Formkörper aus einem Gemisch von 82 Gewichtsteilen Granulat zu 18 Gewichtsteilen Harz gebildet wird und dass die Formfläche des Körpers durch Abformung von einem Positiv und/oder durch mechanische Bearbeitung erzeugt wird, worauf der Formkörper getempert wird.

## Claims

1. A method of producing a cast article of a castable moulding compound consisting of a plastic material moulding compound, of concrete and mortar compounds including binding agents on the base of plastic materials or synthetic resins, of foamed materials, gypsum and similar non-metallic chemically setting materials, wherein a mould (1, 2 ; 11, 12) is provided having at least one mould section made of binding agents and granulated material which is a porous, gas permeable body (3, 4), which body is provided with a gas impermeable jacket (7, 8) with the exception of its mould shape defining mould face (5, 6) kept bare and thus gas permeable, which gas impermeable jacket includes at least one passage (9, 10) allowing a gas exchange, characterized in that a body with a granulated material of substantially uniform granulation is used and by the steps of inserting into the mould prior to the casting an individual parting compound layer structured as a plastic material parting foil which is releasable at least from the mould, of bringing said foil by a thermoplastic expanding and shrinking under heat to a complete and uniform abutting on all contours of the mould shape defining mould face of the mould by drawing said foil against the mould face by a deepdrawing by means of an air pressure differential acting onto said foil and adjusting same to the mould face completely and uniformly, expandingly or shrinkingly, whereby the air to be displaced is expelled or drawn off from the space between said foil and the porous mould face uniformly through every pore thereof by aid of said passage (9, 10).

2. The method of claim 1, comprising the step of retrieving the foil and the cast article sufficiently reinforced on the foil by applying a super atmospheric pressure onto said at least one passage (9, 10).

3. The method of claim 1 or claim 2, in which said foil is left on the cast article after retrieval to form a surface layer thereon.

4. The method of claim 1, comprising the steps of providing in addition to said at least one mould section a further mould section including an elastically deformable hollow body (17) having an outer mould shape defining mould face which is mounted to a rigid base section (18) in a gas-sealed manner, which rigid base (18) is provided with at least one passage (19) for a gas exchange (Fig. 2), of assembling said mould sections for the casting procedure by subjecting the hollow body to a subatmospheric pressure decreasing its dimensions, fitting the mould sections together and thereafter subjecting the hollow body to a pressurization such that it obtains its shape proper for the casting procedure and maintains its shape during the casting procedure.

5. The method of claim 4, wherein said hollow body (17) and said base section (18) consist of an elastomer into which base section a shape-stable filler material, eg a granulated material is admixed.

6. The method according to one of the preceding claims, comprising the step of providing a mould in which the synthetic resin concrete or mortar, respectively, comprises a granulated metallic material, specifically granulated aluminum and/or quartz sand cast therein.

7. The method of claim 1, wherein said mould, specifically in case of handling polymeric concrete or mortar, respectively, is subjected during and/or after the casting of a moulding compound to a vibration having only one single amplitude direction.

8. The method according to one of claims 1 to 7, wherein the castable moulding compound is cast into said at least one mould section and thereafter at least one further mould section is joined to said at least one mould section such to provide said mould assembled, and wherein the castable compound is completely distributed within the assembled mould by a displacing thereof.

9. The method according to one of claims 1 to 8, in which the castable moulding compound is a viscous compound, specifically a polymer concrete or mortar, respectively, wherein said at least one mould section is subjected to a vibration having one single amplitude direction when joining any further mould section to said at least one mould section to form an assembled mould.

10. The method of claim 9, including at least two mould sections of which one forms an outer mould and another forms an inner mould, in which the necessary quantity of the moulding compound is cast completely into the outer mould (1) during which casting the outer mould is still in an open condition and thereafter the inner mould (2) is pressed into the outer mould, and in which a vibration is applied during the displacing of the castable moulding compound.

11. The method according to one of the preceding claims, in which said at least one mould section is subjected to a post treatment for correctively adjusting its mould shape defining mould face.

12. A casting mould for practising the method set forth in claim 1, characterized in that said body consists of granulated aluminium or steel, respectively, of substantially uniform granulation and of synthetic resin as binding means.

13. The casting mould of claim 12, characterized in that said mould face is covered by a porous metallic layer.

14. A method of producing the casting mould of claim 12, characterized in that the mould body consists of a mixture comprising 82 parts by weight granulated material and 18 parts by weight resin, that the mould face is formed by casting from a positive and/or by mechanical treatment, and that thereafter the mould body is tempered.

## Revendications

1. Procédé de fabrication d'une pièce préformée et coulée à partir d'une matière moulable à couler constituée d'une matière synthétique moulable, d'un genre de béton et d'un genre de mortier avec des agents synthétiques ou des liants de résines synthétiques, des produits alvéolaires, du plâtre ainsi que des matériaux semblables non-métalliques qui durcissent chimiquement, dans lequel on utilise un moule (1, 2 ; 11, 12) constitué par au moins une partie de moule ayant un corps (3, 4) poreux, perméable aux gaz et formé par un liant et du granulat, ledit corps étant pourvu d'une chemise (7, 8) étanche aux gaz à l'exception d'une surface (5, 6) moulante qui est maintenue libre et est ainsi perméable aux gaz, cette chemise étanche au gaz présentant au moins un passage (9, 10) destiné à un échange de gaz, caractérisé en ce qu'un corps ayant un granulat d'une granulométrie sensiblement uniforme est utilisé, en ce que, avant l'opération de coulée, une couche individuelle d'un agent de séparation, au moins détachable du moule et réalisée sous la forme d'une feuille de séparation en matière plastique, est mise en place dans le moule, en ce que la feuille est amenée en appui complet et uniforme sur tous les contours de la surface moulante du moule, par un élargissement et une contraction thermoplastiques à la chaleur, la feuille de séparation étant amenée par un emboutissage, au moyen d'une différence de pression d'air agissant sur la feuille de séparation, contre la surface moulante et, elle lui est ajustée complètement et uniformément en élargissant ou en contractant, l'air à supprimer étant évacué ou aspiré uniformément de l'espace entre la feuille et la surface moulante et poreuse, à travers chaque pore de cette dernière au moyen du passage (9, 10).

2. Procédé suivant la revendication 1, caractérisé en ce que la feuille et la pièce préformée suffisamment consolidée sur la feuille sont démoulées par application d'une surpression à au moins un passage (9, 10).

3. Procédé suivant l'une ou l'autre des revendications 1 et 2, caractérisé en ce que, après le démoulage, la feuille est laissée sur la pièce préformée pour réaliser une couche superficielle.

4. Procédé suivant la revendication 1, caractérisé en ce que en plus d'au moins la partie de moule susdite, une autre partie de moule est utilisée qui présente un corps creux (17) élastiquement déformable et ayant une surface externe moulante et, qui est reliée de manière étanche aux gaz avec une pièce de base rigide (18), la pièce de base (18) présentant au moins un passage (19) pour un échange de gaz (fig. 2), en ce que les parties de moule sont réunies pour le processus de coulée, le corps creux étant mis sous une dépression diminuant ses dimensions, et en ce que le corps creux est mis sous pression après avoir joint les parties de moule de sorte qu'il prenne sa forme appropriée pour le processus de coulée et la maintienne pendant le processus de coulée.

5. Procédé suivant la revendication 4, caractérisé en ce que le corps creux (17) et la pièce de base (18) consistent en un élastomère qui, pour la pièce de base, est mélangé avec une masse de remplissage de forme stable, par exemple un granulat.

6. Procédé suivant l'une quelconque des revendications précédentes, caractérisé en ce qu'on utilise un moule pour lequel le béton ou le mortier de résine synthétique contient un granulé métallique coulé, en particulier un granulé d'aluminium et/ou du sable silicieux.

7. Procédé suivant la revendication 1, caractérisé en ce que, particulièrement pour le traitement de béton ou de mortier de polymères, le moule de coulée est soumis à une oscillation suivant seulement une direction d'amplitude pendant et/ou après le remplissage avec la matière moulable.

8. Procédé suivant l'une quelconque des revendications 1 à 7, caractérisé en ce que la matière à couler est mise dans au moins une partie de moule et qu'au moins une autre partie de moule est réunie avec la partie susdite pour le moule de manière que la matière à couler soit complètement répartie à l'intérieur du moule par refoulement.

9. Procédé suivant l'une quelconque des revendications 1 à 8, caractérisé en ce que, lors de la coulée de matières moulables visqueuses, en particulier du béton ou du mortier de polymères, au moins l'une partie de moule est soumise à une oscillation suivant seulement une direction d'amplitude pendant la réunion des parties du moule.

10. Procédé suivant la revendication 9, au moyen d'au moins deux parties de moule présentant un moule externe et un moule interne, caractérisé en ce que la quantité nécessaire de matière moulable est versée entièrement dans le moule externe (1) encore ouvert et qu'ensuite le moule interne (2) est pressé dans le moule externe, la vibration étant appliquée pendant le refoulement de la matière moulable.

11. Procédé suivant l'une quelconque des revendications précédentes, caractérisé en ce qu'au moins la partie de moule est soumise à un traitement ultérieur pour corriger la surface moulante.

12. Moule pour la mise en oeuvre du procédé suivant la revendication 1, caractérisé en ce que le corps de moule est constitué de granulés d'aluminium ou de granulés d'acier ayant une granulométrie sensiblement uniforme et de résine époxy comme liant.

13. Moule suivant la revendication 12, caractérisé en ce que la surface du moule est munie d'un revêtement métallique poreux.

14. Procédé pour la fabrication du moule suivant la revendication 12, caractérisé en ce que le corps de moule est réalisé par un mélange de 82 parties en poids de granulés pour 18 parties en poids de résine et en ce que la surface de moule du corps est produite par un moulage d'un positif et/ou par un usinage mécanique, après quoi le corps de moule est malléabilisé.

FIG. 1

FIG. 2

FIG. 3